# EUROPEAN PATENT SPECIFICATION

(11) **EP 3 330 814 B1**
(45) Date of publication and mention of the grant of the patent: **23.02.2022**
(21) Application number: 17204874.6
(22) Date of filing: 01.12.2017
(51) Int. Cl.: G05B 19/048

(54) **MAINTENANCE MANAGING APPARATUS, MAINTENANCE MANAGING METHOD, MAINTENANCE MANAGING PROGRAM, AND NON-TRANSITORY COMPUTER READABLE STORAGE MEDIUM**
WARTUNGSVERWALTUNGSVORRICHTUNG, WARTUNGSVERWALTUNGSVERFAHREN, WARTUNGSVERWALTUNGSPROGRAMM UND ÜBERGANGSLOSES COMPUTERLESBARES SPEICHERMEDIUM
APPAREIL DE GESTION DE MAINTENANCE, PROCÉDÉ DE GESTION DE MAINTENANCE, PROGRAMME DE GESTION DE MAINTENANCE, ET SUPPORT D'INFORMATIONS LISIBLE PAR ORDINATEUR NON TRANSITOIRE

(30) Priority: 02.12.2016 JP 2016235389
(43) Date of publication of application: 06.06.2018
(73) Proprietor: Yokogawa Electric Corporation, Tokyo 180-8750 (JP)
(72) Inventor: Yokochi, Yutaka, Tokyo 180-8750 (JP)
(74) Representative: Henkel & Partner mbB

(56) References cited:
- EP-A1- 3 232 380
- US-A1- 2011 093 098
- Alexander E Jansson ET AL: "SAP notifications data model - Automatic reporting of maintenance and defect data from electrical power grids", , 1 January 2004 (2004-01-01), XP055474279, Retrieved from the Internet: URL:http://publications.lib.chalmers.se/re cords/fulltext/174364/174364.pdf

## Description

### BACKGROUND

### Technical Fields

The present invention relates to a maintenance managing apparatus, a maintenance managing method, a maintenance managing program, and a non-transitory computer readable storage medium.

Priority is claimed on Japanese Patent Application No. 2016-235389, filed December 2, 2016.

### Related Art

In plants such as chemical industry plants or the like, a plant that manages and controls a well site of a gas field, an oil field, or the like and the surroundings thereof, a plant that manages and controls hydroelectric power generation, thermal power generation, and nuclear power generation, or the like, a plant that manages and controls environmental power generation such as solar power generation and wind power generation, or the like, a plant that manages and controls water supply and sewerage, a dam, or the like and factories (hereinafter, in a case in which these are collectively referred to, they will be referred to as "plants"), distributed control systems (DCS) have been constructed, and high-level automatic operations have been realized. In a DCS, field devices such as a measuring instrument, an operation device, and the like and a control apparatus controlling these are connected through a communicating means.

In a system or the like of a plant built for realizing high-level automatic operation described above, it is important to perform maintenance of field devices for stable operation of the plant. A maintenance worker performing maintenance of field devices performs operations which are maintenance items such as a regular inspection of field devices, changing of setting information set in the field devices, zero-point adjustment, a loop test, and the like, for example, by using a hand-held terminal device. The maintenance worker may perform operations which are maintenance items not using a maintenance apparatus such as installation of a new field device, and replacement, offline repairs, and the like of a malfunctioning field device, and the like. The maintenance worker writes the performed maintenance operations in a report or the like and reports the maintenance operations to a maintenance supervisor managing the maintenance worker.

By using a maintenance apparatus automatically generating a maintenance report by supporting the performing of zero-point adjustment or a loop test, a maintenance worker can increase the efficiency of the maintenance operation (for example, see Japanese Unexamined Patent Application Publication No. 2009-211308).

However, even in a case in which a maintenance apparatus automatically generating maintenance reports is used, there are cases where the management of a file in which generated maintenance reports are recorded becomes complex or it takes time to check the contents of the file by using a PC or the like. When a maintenance operation that cannot be performed by a maintenance apparatus is performed, it is necessary to manually generate a maintenance report additionally.

In a case in which maintenance reports are manually generated, since many field devices are installed in a large-sized plant, there are cases where the costs for generating the maintenance reports increases according to increase in the maintenance operations.

In a case in which maintenance reports are manually generated, there are cases where the quality of the maintenance report deteriorates due to the occurrences of mistakes in the entries of the maintenance reports, deviations in the methods of listing, forgetting to generate maintenance reports, and the like. According to a decrease in the quality of maintenance reports, there are cases where a maintenance supervisor may not be able to understand the maintenance operations which have been performed. Alexander E Jansson ET AL: "SAP notifications data model - Automatic reporting of maintenance and defect data from electrical power grids", 1 January 2004, URL: http://publications.lib.chalmers.se/records/fulltext/174364/1 74364.pdf discloses that data is collected from an electrical power grid, and that the collected data is analysed.

EP 3 232 380 A1 discloses a device maintenance apparatus including a device information storage storing information of a device and one or more maintenance items associated with the information of the device, an acquirer configured to acquire the information of the device, and a display configured to display the acquired information of the device and an operator receivable of an operation for executing, with respect to the device, at least one maintenance item among the one or more maintenance items associated with the acquired information of the device and stored in the device information storage.

### SUMMARY OF THE INVENTION

Accordingly, there is provided a maintenance managing apparatus as set out in independent claim 1, a maintenance managing method as set out in independent claim 6, a maintenance managing program as set out in independent claim 10, and a non-transitory computer readable storage medium as set out in independent claim 11. Advantageous developments are defined in the dependent claims.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating an example of the software configuration of a maintenance managing apparatus according to an embodiment.
FIG. 2 is a diagram illustrating an example of a device list of a maintenance managing apparatus according to an embodiment.
FIG. 3 is a diagram illustrating an example of a parameter designation list of a maintenance managing apparatus according to an embodiment.
FIG. 4 is a diagram illustrating an example of an estimation rule of a maintenance managing apparatus according to an embodiment.
FIG. 5 is a diagram illustrating an example of a setting history of a maintenance managing apparatus according to an embodiment.
FIG. 6 is a diagram illustrating an example of an operation setting history of a maintenance managing apparatus according to an embodiment.
FIG. 7 is a block diagram illustrating an example of the hardware configuration of a maintenance managing apparatus according to an embodiment.
FIG. 8 is a block diagram illustrating a first example of a maintenance managing system including a maintenance managing apparatus according to an embodiment.
FIG. 9 is a block diagram illustrating a second example of a maintenance managing system including a maintenance managing apparatus according to an embodiment.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a maintenance managing apparatus, a maintenance managing method, a maintenance managing program, and a non-transitory computer readable storage medium capable of achieving a decrease in the costs for generating reports accompanying maintenance operations and improvement in the quality of the reports and understanding of maintenance operations by estimating the maintenance operations performed.

Hereinafter, a maintenance managing apparatus, a maintenance managing method, a maintenance managing program, and a non-transitory computer readable storage medium according to one embodiment of the present invention will be described in detail with reference to the drawings.

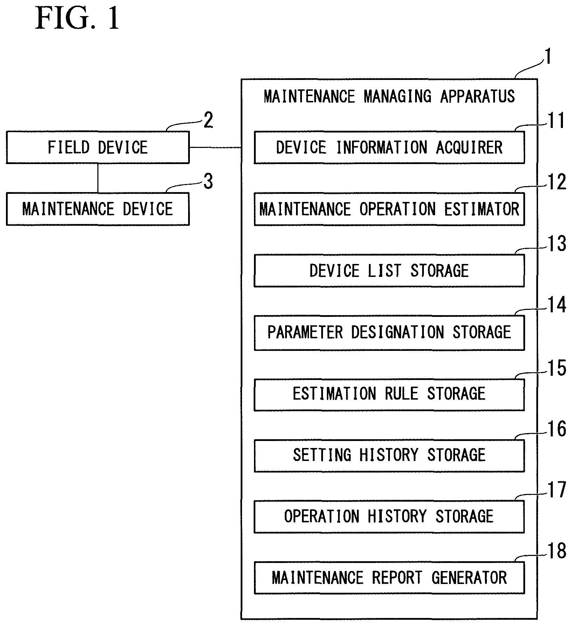

First, the software configuration of a maintenance managing apparatus 1 will be described with reference to FIG. 1. FIG. 1 is a block diagram illustrating an example of the software configuration of a maintenance managing apparatus according to an embodiment.

As illustrated in FIG. 1, the maintenance managing apparatus 1 has functions of a device information acquirer 11, a maintenance operation estimator 12, a device list storage 13, a parameter designation storage 14, an estimation rule storage 15, a setting history storage 16, an operation history storage 17, and a maintenance report generator 18. Each of the functions of the maintenance managing apparatus 1 is a functional module that is realized by a maintenance managing program controlling the maintenance managing apparatus 1. The maintenance managing program may be provided from either a server providing programs or a recording medium.

The device information acquirer 11 acquires device information of a field device 2. The field device 2 according to this embodiment is a sensor or an actuator that is installed at a plant and has a communication function for communication through a wired or wireless network. The sensor, for example, obtains data of a physical quantity such as a pressure, temperature, pH, or the flow rate of a generated material in each process of the plant. The actuator is a valve, a pump, or the like.

The field device 2 communicates with an operation control apparatus to be described later through a wired or wireless communication. The field device 2, for example, has a communication function corresponding to a communication (may be referred to as "field communication") standard dedicated for industrial instruments such as ISA100 that is a radio communication standard of the Internal Society of Automation (ISA), a highway addressable remote transducer (HART) (registered trademark), BRAIN (registered trademark), a foundation field bus, or a Profibus. In the field device 2 illustrated in FIG. 1, one or a plurality of field devices performing communication according to such a communication standard are not illustrated. Thus, in a case in which a field device 2 is represented, it includes both a case in which one field device is represented and a case in which a plurality of field devices is represented.

A maintenance device 3 is a device that performs a maintenance operation of the field device 2. The maintenance device 3, for example, is a hand-held terminal device that performs operations of maintenance items such as a regular inspection of the field device 2, changing setting information (parameters) set in the field device, zero-point adjustment, and a loop test. The maintenance device 3 may be a device that automatically records a result of maintenance. There are cases where the parameters of the field device change as a maintenance worker performs a maintenance operation of the field device 2 by using the maintenance device 3. For example, in zero-point adjustment, there are cases where the zero point of the field device is changed. There are cases where the parameters of the field device 2 are changed so as to change the operation state of the process. The maintenance worker describes a performed maintenance operation in a report or the like and reports the performed maintenance operation to a maintenance supervisor managing the maintenance worker.

The device information of the field device 2 that is acquired by the device information acquirer 11 includes a change in the state of the field device 2. The state of the field device 2, for example, is a state (network connection state) representing whether or not the field device 2 is connected to a network. The state of the field device 2 is the state of a parameter (parameter setting state) set in the field device.

### <Change in network connection state>

A change in the network connection state is a change in the communication state of the field device 2. A state in which the field device 2 is connected to a network represents a state in which the field device 2 can perform communication through the network. A state in which the field device 2 is not connected to a network represents a state in which the field device 2 cannot perform communication through the network. Thus, a change in the network connection state is a change between the state in which the field device 2 can perform communication and the state in which the field device 2 cannot perform communication. For example, when the field device 2 cannot perform communication due to a power problem or the like even in the case of being physically wired to a wired network, the field device 2 is regarded to be in a state not connected to the network. A change in the network connection state can be acquired with reference to the device list storage 13.

### <Change in parameter setting state>

A change in the parameter setting state, for example, represents that a parameter set in the field device has been updated or newly set. The maintenance managing apparatus 1 acquires a change in the state of the field device 2 through the device information acquirer 11. The device information acquirer 11 may be configured to acquire a change in the state of the field device 2 directly from the field device 2 through field communication described above or acquire a change in the state of the field device 2 through another apparatus.

The maintenance operation estimator 12 estimates a maintenance operation performed to the field device 2 with reference to an estimation rule based on a change in the state of the field device 2. The estimation rule is information associating a change in the state of the field device 2 with a maintenance operation performed to the field device. Here, a change in the state and a maintenance operation associated with each other have mutual relevance. The estimation rule may be set in advance and configured to be able to be updated. Based on information of a change in state of the field device 2 that is acquired by the device information acquirer 11, the maintenance operation estimator 12 determines whether or not a change in state has been set with reference to the estimation rule. In a case in which the maintenance operation estimator 12 has determined that the change in state has been set in the estimation rule, the maintenance operation estimator 12 acquires information of a maintenance operation associated with the change in state from the estimation rule. By estimating a maintenance operation performed to the field device 2 based on the change in the state of the field device 2 by using the maintenance operation estimator 12, the information of the maintenance operation performed to the field device by a maintenance worker can be automatically collected.

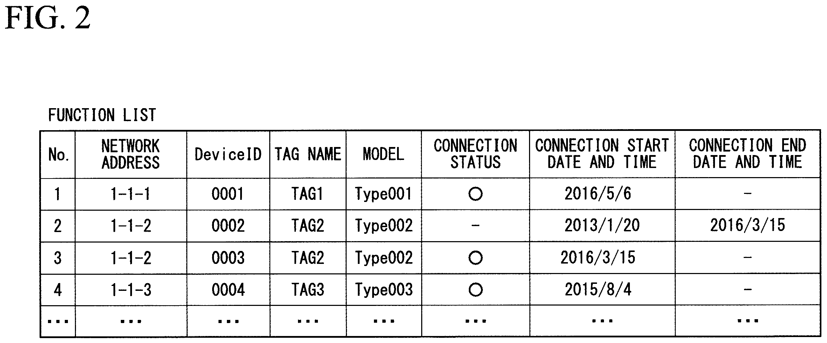

The device list storage 13 stores identification information of the field device 2 and the communication state of the field device 2 in association with each other. The maintenance operation estimator 12 can estimate a maintenance operation from a change in the communication state of the field device that is acquired based on a device list stored in the device list storage 13. Here, the device list will be described with reference to FIG. 2. FIG. 2 is a diagram illustrating an example of the device list of a maintenance managing apparatus 1 according to an embodiment.

As illustrated in FIG. 2, the device list includes data items of "No.", "network address", "device ID", "tag name", "model", "connection status", "connection start date and time", and "connection end date and time". Such data items of the device list are automatically collected through a network to which the field device 2 is connected or input.

The data item of "No." represents the number of a record (row direction) of the device list. The "No." is assigned when the information of a new field device 2 is acquired.

The data item of "Network address" is an address in the network to which the field device 2 is connected. For the network address, an address format set by the communication standard of the network is used. A network address can be acquired by the field device through network communication.

The data item of "device ID" is identification information (ID) used for uniquely identifying a field device. The device ID for example, is a serial number that is defined for each protocol and is assigned to each device for identifying an individual field device. Thus, a field device before replacement and a field device after replacement have mutually-different device IDs.

The data item of "tag name" is identification information (ID) used for identifying the use of the field device. The tag name may be individually set to each field device 2. Thus, the same tag name may be set to a field device before replacement and a field device after replacement.

The data item of "model" is the model name of a field device 2 and is assigned according to the model of each device. The information of the model may be acquired from a field device through a network.

The data item of "connection status" represents whether or not a field device 2 included in a device list is connected to a network. The "connection status" can be detected based on a network address and a device ID or a tag name of a field device that is currently connected through a network. The device list is generated when the device information acquirer 11 illustrated in FIG. 1 acquires device information from field devices connected to a network. The connection status of a field device of which the device information is acquired is represented as "o". However, device information is not acquired from a field device 2 that is offline from the network due to a malfunction or the like, and accordingly, the connection status thereof is changed to "-". In other words, the device list illustrated in FIG. 2 is acquired by forming not only field devices 2 that are currently connected to the network but also field devices 2 that were connected in the past as a list. In a case in which a field device 2, which was connected in the past, that is recorded in the device list and has been offline once becomes online again, the data item of the connection state of a record of the field device 2 recorded in the device list is changed from "-" to "o". On the other hand, a field device that has no record of a past connection and is newly connected to the network (becomes online) is recognized as a new field device 2, and a new record is added.

The data item of "connection start date and time" is a date and time at which a record of a field device is newly added to the device list. The showing of time information is not illustrated in the drawing. In a case in which the field device 2 is replaced in the same tag name or the like, the replacement date and time may be input in the data item of the connection start date and time.

The data item of "connection end date and time" is a date and time at which the field device 2 becomes offline and is a date and time at which the "connection status" is changed to "-". In this embodiment, the maintenance operation estimator 12 estimates the performance of a maintenance operation not only for new addition of a device but also a change from online to offline as changes in the state of the field device 2. For this reason, it is necessary to store a record representing a change in the state of the field device to offline at any one place. A field device of a record in which information of a date and time is recorded in the "connection end date and time" is a device connected to the network in the past, and a change in the connection state thereof from online to offline is referred to by the maintenance operation estimator 12. After a record of a field device, which was connected to the network in the past, that is offline is used once for the estimation of the maintenance operation by the maintenance operation estimator 12, the record may be deleted at an arbitrary timing.

For example, in the case illustrated in FIG. 2, in records (rows) in which the data items of "No." are "2" and "3", while the data items "1-1-2" and "TAG2" are the same for "network address" and "tag name", the data items "0002" and "0003" are different from each other for the "device ID". The field device of which the device ID is "0002" has "2016/3/15" as a data item for the "connection end date and time", and the field device of which the device ID is "0003" has "o" as a data item for the "connection status" and has "2016/3/15" as a data item for the "connection start date and time". Using changes in the network connection state according to transitions between such data items, it can be detected that there has been rotation (exchange) from the field device of which the device ID is "0002", having a connection ended on Mar. 15, 2016, to the field device of which the device ID is "0003".

This ends the description of the device list with reference to FIG. 2, and the description returns to FIG. 1 again.

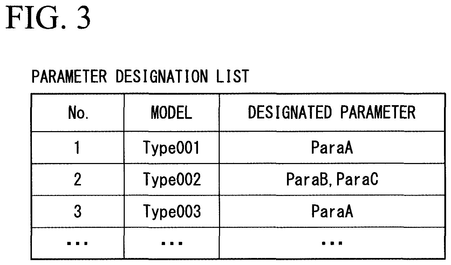

The parameter designation storage 14 stores a parameter designation list which designates parameters detected as having a changed parameter setting state among various parameters set in the field device 2. The maintenance operation estimator 12 can estimate maintenance operations based on changes in the parameters of field devices acquired based on the parameter designation list stored in the parameter designation storage 14. Here, the parameter designation list will be described with reference to FIG. 3. FIG. 3 is a diagram illustrating an example of the parameter designation list of a maintenance managing apparatus according to an embodiment.

In the example illustrated in FIG. 3, the parameter designation list includes data items of "No.", "model", and "designated parameter". Such data items of the parameter designation list designate parameters used for the estimation of a maintenance operation using an estimation rule to be described later. The parameter designation list is generated when an estimation rule is generated.

The data item of "No." is the number of a record of the parameter designation list.

The data item of the "model" is a model name of the field device 2 and is assigned according to the model of each device. In the example illustrated in FIG. 3, the designated parameter is designated for each of the models of field devices. Here, the designated parameter, for example, may be individually set for each field device.

The data item of the "designated parameter" designates a parameter used for detecting a change in the setting in a field device designated by the data item of the "model". For example, for a field device 2 of which the "model" is "Type001", "ParaA" is designated as the "designated parameter". For a field device 2 of which the "model" is "Type002", two parameters of "ParaB and ParaC" are designated as the "designated parameter". The types and numbers of parameters to be designated are arbitrarily set according to the field device 2. By designating parameters in accordance with the designated parameter list, the acquisition of unnecessary information from field devices can be reduced.

In the designated parameter list, for example, the acquisition frequency of each parameter, a method of excluding abnormal values (for example, ignoring changes in parameters at the time of startup of a plant), and the like may be set.

This ends the description of the parameter designation list with reference to FIG. 3, and the description returns to FIG. 1 again.

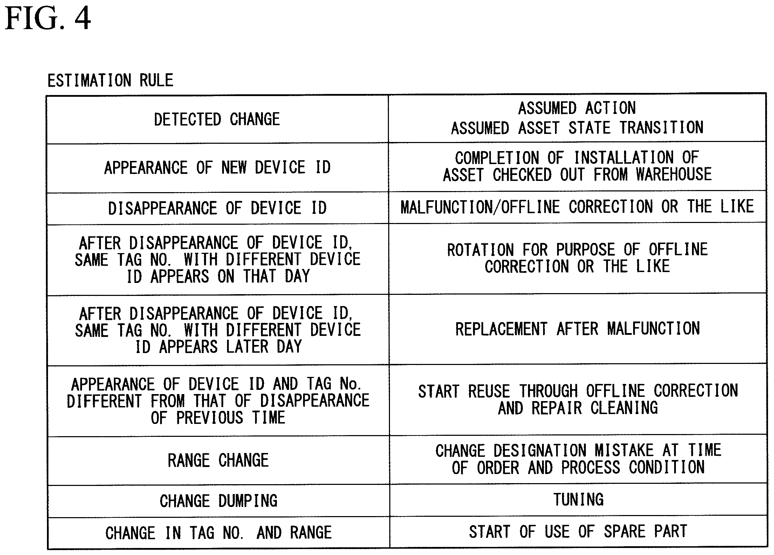

The estimation rule storage 15 stores an estimation rule in which a change in the state of the field device and a maintenance operation performed to the field device are associated with each other. With reference to (searching for) the estimation rule, the maintenance operation estimator 12 can estimate a maintenance operation performed to a field device based on a change in the state of the field device. Here, the estimation rule will be described with reference to FIG. 4. FIG. 4 is a diagram illustrating an example of the estimation rule of a maintenance managing apparatus 1 according to an embodiment.

In the example illustrated in FIG. 4, the estimation rule includes data items of "Detected Change", "Assumed Action", and "Assumed Asset State Transition". Such data items of the estimation rule, for example, can be generated by analyzing a past maintenance record and a change in the state of the field device at that time in comparison with each other.

The data item of the "Detected Change" represents a change in the state of the field device 2. While the data item of the "Detected Change" is described in English for easy understanding, in the estimation rule referred to by the maintenance operation estimator 12, a calculation equation corresponding to the English description is described. For example, "appearance of new device ID" may be detected when there has been addition of a field device having a new tag name to the device list described with reference to FIG. 2 (communication with a new field device becomes possible). In the data item of the "Detected Change", events such as a change in the state of the field device and a date and time of the change that can occur in the maintenance operation can be defined.

A maintenance operation estimated based on the data item of the "Detected Change" is associated with the data item of "Assumed Action and Assumed Asset State Transition". For example, a maintenance operation of "completion of installation of an asset checked out from a warehouse" may be associated with the "appearance of new device ID". In other words, the data item of "Assumed Action and Assumed Asset State Transition" includes information of a performed maintenance item of "completion of installation" and the movement of the asset (field device 2). For example, in a case in which a new field device 2 is installed in a plant, there are cases where a maintenance worker performs an accompanying operation such as a delivery operation of the field device or management of a stock list in addition to the actual installation operation. For this reason, with reference to the estimation rule illustrated in FIG. 4, not only a maintenance operation of the installation of the field device 2 but also an operation accompanying the maintenance operation can be estimated.

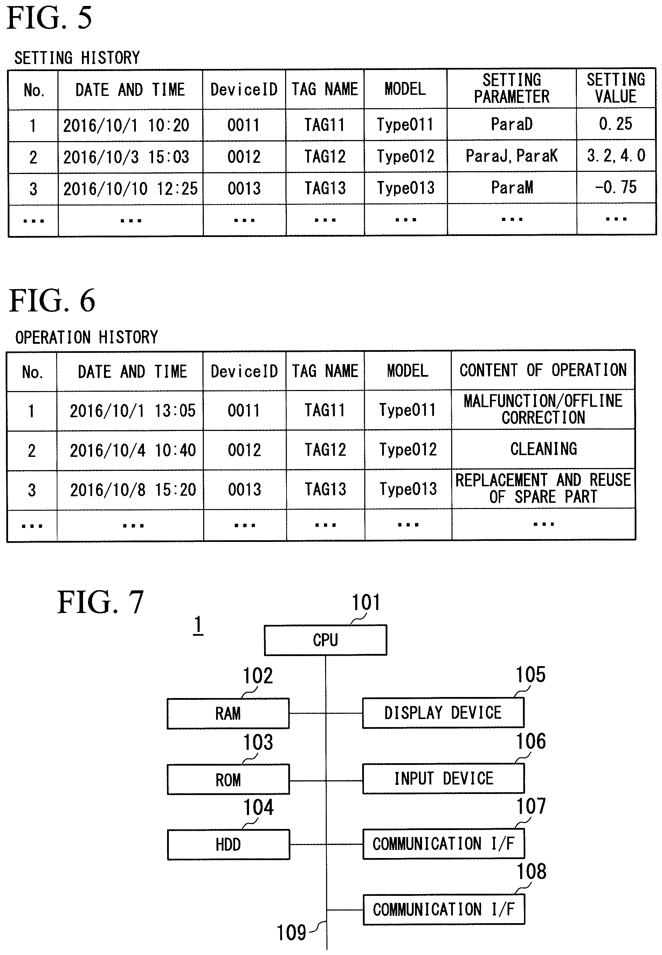

A result of estimation based on an estimation rule of the parameter setting of the field device will be described with reference to FIG. 5, and a result of estimation based on an estimation rule of the maintenance operation will be described with reference to FIG. 6.

This ends the description of the parameter designation list with reference to FIG. 4, and the description returns to FIG. 1 again.

The setting history storage 16 stores a setting history that is a history of maintenance operations of parameter setting estimated by the maintenance operation estimator 12. Here, the setting history will be described with reference to FIG. 5. FIG. 5 is a diagram illustrating an example of a setting history of a maintenance managing apparatus 1 according to an embodiment.

In the example illustrated in FIG. 5, the setting history includes data items of "No.", "date and time", "device ID", "tag name", "model", "setting parameter", and "setting value". Such data items of the setting history are input based on a result of estimation performed by the maintenance operation estimator 12.

The data item of the "No." is the number of a record in the setting history. The "No." is added when the maintenance operation estimator 12 performs a process of estimating a maintenance operation.

The data item of the "date and time" is a date and time at which a maintenance operation estimated by the maintenance operation estimator 12 is performed.

The data item of the "device ID" is identification information (ID) used for uniquely identifying a field device. The device ID, for example, is a serial number that is defined for each protocol and identifies an individual field device.

The data item of the "tag name" is identification information used for identifying the use of the field device. The data item of the "model" is a model name of the field device 2. The "tag name" and the "model" can be acquired from the device list described with reference to FIG. 2.

The item of the "setting parameter" is a setting parameter for which the maintenance operation is performed to the field device 2. When a plurality of setting parameters are changed in a maintenance operation, a plurality of setting parameters are input to the data items of the setting parameters. The data item of the "setting value" is a setting value for the setting parameter. The data item of the "setting parameter" corresponds to the designated parameter described with reference to FIG. 3.

This ends the description of the setting history with reference to FIG. 5, and the description returns to FIG. 1 again.

The operation history storage 17 stores an operation history that is a history of maintenance operations estimated by the maintenance operation estimator 12 other than the parameter. Here, an operation history will be described with reference to FIG. 6. FIG. 6 is a diagram illustrating an example of an operation history of a maintenance managing apparatus 1 according to an embodiment.

In the example illustrated in FIG. 6, the operation history includes data items of "No.", "date and time", "device ID", "tag name", "model", and "operation content". Such data items of the operation history are input based on estimation performed by the maintenance operation estimator 12. The data items of the "No.", the "date and time", the "device ID", the "tag name", and the "model" are similar to those illustrated in FIG. 5, and thus description thereof will not be presented.

The data item of the "operation content" is the content of a maintenance operation other than the parameter setting estimated by the maintenance operation estimator 12. In FIGS. 5 and 6, while a case has been illustrated in which the parameter setting and the other maintenance operations are respectively stored in different tables, such estimation results may be stored in the same table. This ends the description of the operation history with reference to FIG. 6, and the description returns to FIG. 1 again.

The maintenance report generator 18 generates a maintenance report used for recording a history of maintenance operations based on the setting history recorded in the setting history storage 16 or the operation history stored in the operation history storage 17. A maintenance report generated by the maintenance report generator 18 is generated by arbitrarily selecting one or more items recorded in the setting history or the operation history. It is assumed that the description format of the report can be arbitrarily set. The maintenance report generator 18 may separately set a display format for display on a display or the like and a print format for printing and outputting from a printer or the like.

A case has been illustrated in which each of the functions of the device information acquirer 11, the maintenance operation estimator 12, the device list storage 13, the parameter designation storage 14, the estimation rule storage 15, the setting history storage 16, the operation history storage 17, and the maintenance report generator 18 of the maintenance managing apparatus 1 illustrated in FIG. 1 is realized by software. However, one or more functions among the functions described above may be realized by hardware. Each of the functions described above may be divided into a plurality of functions. Two or more functions described above may be integrated into one function.

Next, the hardware configuration of the maintenance managing apparatus 1 will be described with reference to FIG. 7. FIG. 7 is a block diagram illustrating an example of the hardware configuration of the maintenance managing apparatus 1 according to an embodiment.

In the example illustrated in FIG. 7, the maintenance managing apparatus 1 includes: a central processing unit (CPU) 101, a random access memory (RAM) 102, a read only memory (ROM) 103, a hard disk drive (HDD) 104, a display device 105, an input device 106, a communication interface (I/F) 107, and a communication I/F 108, and a bus 109 connecting these.

The maintenance managing apparatus 1, for example, is a server apparatus, a general-purpose computer such as a PC of a desktop type, an FA computer, an apparatus such as a PLC, a computer of a notebook type or a tablet type, a PDA, a smartphone, or the like. The hardware of the maintenance managing apparatus 1 may be configured as either a single apparatus or a system configured by a combination of a plurality of apparatuses. The maintenance managing apparatus 1 may share hardware with other apparatuses.

The CPU 101 executes a program stored in the RAM 102, the ROM 103, or the HDD 104, thereby controlling the maintenance managing apparatus 1. The CPU 101 executes a maintenance managing program used for realizing the operation of the maintenance managing apparatus 1. The maintenance managing program, for example, is acquired from a recording medium in which the maintenance managing program is recorded, a server providing the maintenance managing program through a network, or the like, is installed in the HDD 104, and is stored in the RAM 102 to be readable from the CPU 101.

The display device 105, for example, is a liquid crystal display having a display function. The display device 105 may be realized by any one of various forms such as a head-mount type display, a glass-type display, and a wrist-watch type display. The input device 106, for example, is a keyboard or a mouse having an input function. The input device 106 may be a microphone inputting audio information, a camera or a scanner inputting video information, or the like. The display device 105 and the input device 106 may be realized by a device having a display function and an input function such as a touch panel.

The communication I/F 107 controls communication with other apparatuses such as a manufacturing execution system 5 and an operation control apparatus 4 to be described later and the maintenance device 3 through wired communication or wireless communication. The communication I/F 107 performs communication control of data transmission/reception, voice calls, or mail transmission/reception for other connected apparatuses. The communication I/F 107, for example, performs communication control corresponding to general-purpose communication standards such as wireless LAN communication, wired LAN communication, infrared communication, and near field radio communication.

The communication I/F 108 controls communication with other apparatuses such as the operation control apparatus 4, the maintenance device 3, a field device not illustrated in the drawing, and the like through wired communication or wireless communication. The communication I/F 108, for example, performs communication control corresponding to field communication standards such as ISA100, HART (registered trademark), BRAIN (registered trademark), foundation fieldbus, and Profibus.

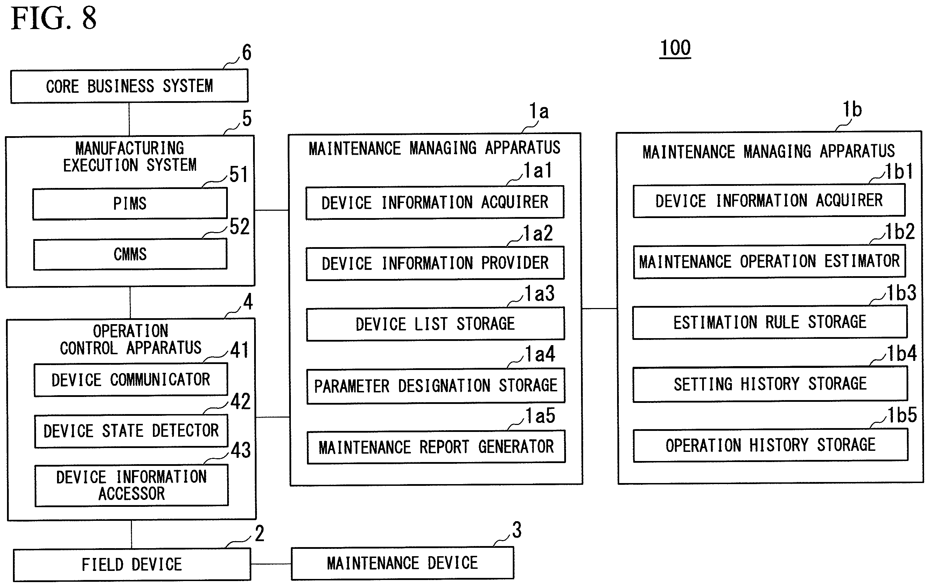

Next, a maintenance managing system including the maintenance managing apparatus 1 will be described with reference to FIG. 8. FIG. 8 is a block diagram illustrating a first example of a maintenance managing system 100 including a maintenance managing apparatus 1 according to an embodiment.

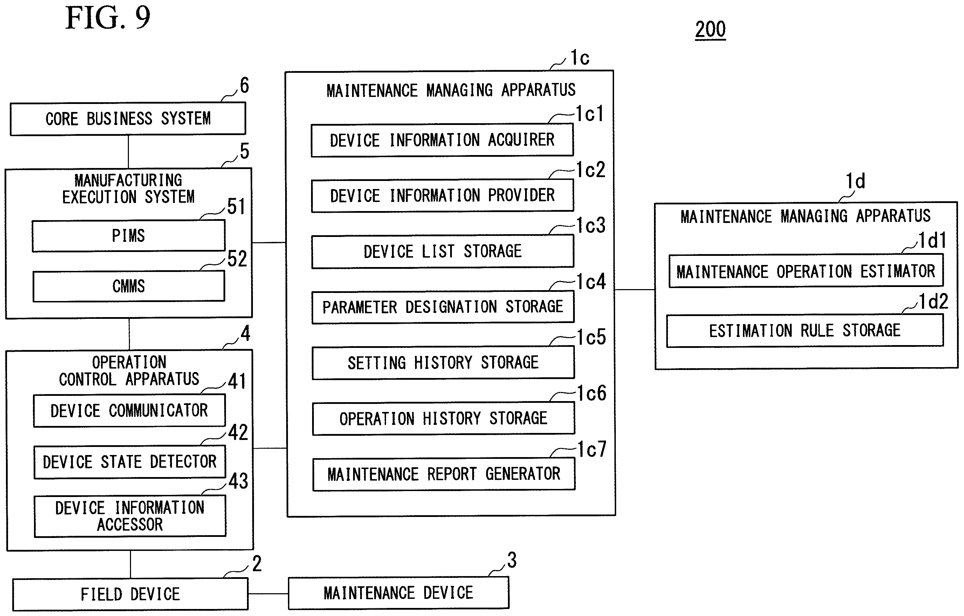

The configuration of each of the functions of the device information acquirer 11, the maintenance operation estimator 12, the device list storage 13, the parameter designation storage 14, the estimation rule storage 15, the setting history storage 16, the operation history storage 17, and the maintenance report generator 18 of the maintenance managing apparatus 1 illustrated in FIG. 1 describes the content of each function and is not for limiting the device as hardware in which each function is performed. For example, the maintenance managing apparatus 1 may be configured by one apparatus or a system including a plurality of apparatuses. The functions of the maintenance managing apparatus 1 may be executed by being distributed in a plurality of apparatuses. A part of the plurality of apparatuses, for example, may be performed in a cloud service realized by cloud computing. The maintenance managing system 100 including the maintenance managing apparatus 1 described with reference to FIGS. 8 and 9 represents an embodiment of a case in which the functions of the maintenance managing apparatus 1 described with reference to FIG. 1 are arranged to be distributed in a plant system. In other words, the maintenance managing system 100 is one embodiment of the maintenance managing apparatus 1.

In the case illustrated in FIG. 8, the maintenance managing system 100 includes a maintenance managing apparatus 1a, a maintenance managing apparatus 1b, a field device 2, a maintenance device 3, an operation control apparatus 4, a manufacturing execution system 5, and a core business system 6.

The maintenance managing apparatus 1a has each of functions of a device information acquirer 1a1, a device information provider 1a2, a device list storage 1a3, a parameter designation storage 1a4, and a maintenance report generator 1a5. The maintenance managing apparatus 1b has each of functions of a device information acquirer 1b1, a maintenance operation estimator 1b2, an estimation rule storage lb3, a setting history storage 1b4, and an operation history storage 1b5. The operation control apparatus 4 has each of functions of a device communicator 41, a device state detector 42, and a device information accessor 43.

The operation control apparatus 4 controls a pump, a valve, a heater, and the like not illustrated in the drawing based on process data acquired from the field device 2, thereby controlling the process of the plant. The operation control apparatus 4, for example, is a control apparatus such as a programmable logic controller (PLC).

The device communicator 41 controls communication with the field device 2 in network communication corresponding to the field communication standard, thereby transmitting/receiving data to/from the field device 2. The device state detector 42 detects the field device 2 connected to a network. The device information accessor 43 accesses a parameter set in the field device 2 and performs referring to the setting parameter, setting of the parameter, and the like. The device communicator 41 is constantly connected to the field device 2. Accordingly, the device state detector 42 can detect connection/disconnection of the field device 2 for the network in real time. The device information accessor 43 can detect a change in the setting parameter of the field device 2 in real time.

The operation control apparatus 4 provides information acquired from the field device 2 such as the connection state of the field device 2 for the network and a change in the setting parameter of the field device 2 for the manufacturing execution system 5.

The manufacturing execution system 5, for example, is a manufacturing execution system (MES) positioned between the core business system 6 and the operation control apparatus 4 and monitors and manages the information of the field device acquired by the operation control apparatus 4. The manufacturing execution system 5, for example, is a general-purpose computer such as a server apparatus or a desktop-type PC. The manufacturing execution system may have the function of a plant information management system (PIMS) 51, a computerized maintenance management system (CMMS; plant maintenance managing system) 52, or the like.

The manufacturing execution system 5 provides the connection state of the field device 2 for the network of the field communication and a change in the setting parameter of the field device 2, which are acquired from the operation control apparatus 4, for the maintenance managing apparatus 1a.

The PIMS 51 of the manufacturing execution system 5 functions as a plant information managing system collecting and recording the plant state information. In the case illustrated in FIG. 8, the PIMS 51 collects and records the information of the field device 2 through the operation control apparatus 4 (or directly not through the operation control apparatus 4). The PIMS 51 collects the information of the field device 2 in a time series and records the collected information as history data (history data, history). The history data includes the information of the field device 2 and a date and time at which the information is obtained. The PIMS 51 provides history data and current (latest) information for the maintenance managing apparatus 1a. For example, when the information of the field device 2 is acquired, the PIMS 51 provides the acquired information for the maintenance managing apparatus 1a and records the acquired information as history data. The PIMS 51 provides the recorded history data for the maintenance managing apparatus 1a regularly or in accordance with an acquisition request from the maintenance managing apparatus 1a. The history data is a history of a plurality of pieces of obtained data recorded for a predetermined period, for example, one hour, one day, one week, or the like.

In the manufacturing execution system 5, the CMMS 52 functions as a plant maintenance managing system that records a maintenance history of the plant and manages a maintenance plan. The CMMS 52, for example, acquires an operation history of maintenance operations for the field device, which is performed and recorded by maintenance devices 3, from a plurality of maintenance devices 3 and records the acquired operation history as maintenance information. The CMMS 52 may allow a maintenance operation performed by a maintenance worker to be manually input and record the input maintenance operation as maintenance information. The CMMS 52 may provide maintenance information provided by the maintenance device 3 for the maintenance managing apparatus 1a for the maintenance managing apparatus 1a. When an estimation rule is generated, the maintenance information can be used as basic data of a maintenance operation.

The core business system 6, for example, is an enterprise resource planning (ERP) system dedicated for a process manufacturing industry for managing enterprise resources such as an accounting process, production management, and sales management. The core business system 6 may use information of the operation state of the plant as management information of enterprise resources. The core business system 6 may include a maintenance managing system managing the maintenance of the plant and the business information of repairs and the like. The core business system 6, for example, is a general-purpose computer such as a server apparatus or a desktop-type PC, or the like.

Each of the maintenance managing apparatus 1a and the maintenance managing apparatus 1b is an apparatus realizing a part of the functions of the maintenance managing apparatus 1 illustrated in FIG. 1. The maintenance managing apparatus 1a, for example, may be installed at a plant site such as inside the same building as the plant or in a factory. On the other hand, the maintenance managing apparatus 1b, for example, is realized by a virtual computer apparatus provided using a cloud service.

The device information acquirer 1a1 of the maintenance managing apparatus 1a acquires the device information of the field device 2 through the operation control apparatus 4 or the manufacturing execution system 5. The functions of the device list storage 1a3, the parameter designation storage 1a4, and the maintenance report generator la5 are similar to those of the device list storage 13, the parameter designation storage 14, and the maintenance report generator 18 described with reference to FIG. 1, and thus, description thereof will not be presented. The maintenance managing apparatus 1a is an apparatus having a device information collecting function for collecting device information used for estimating a maintenance operation. By collecting device information using the maintenance managing apparatus 1a, the process of collecting device information, which has a high execution frequency, can be configured to be independent from the maintenance managing apparatus 1b estimating a maintenance operation, and the load of the maintenance managing apparatus 1b can be decreased. The device information provider la2 provides the device information of the field device 2 collected by the device information acquirer 1a1 for the maintenance managing apparatus 1b.

The device information acquirer 1b1 of the maintenance managing apparatus 1b acquires the device information of the field device from the device information provider 1a2. The functions of the maintenance operation estimator 1b2, the estimation rule storage 1b3, the setting history storage 1b4, and the operation history storage 1b5 of the maintenance managing apparatus 1b are similar to those of the maintenance operation estimator 12, the estimation rule storage 15, the setting history storage 16, and the operation history storage 17 of the maintenance managing apparatus 1, and thus, description thereof will not be presented.

Meanwhile, there are cases where the content of the process of estimating a maintenance operation and the content of the estimation rule include know-how items relating to the maintenance of the field device 2. Since each function of the maintenance managing apparatus 1b is provided by a cloud service, the content of the process of estimating a maintenance operation performed by the maintenance operation estimator lb2 and the estimation rule are performed independently from the plant site. Accordingly, the service of the process of estimating a maintenance operation can be provided in a state in which the confidentiality of the content of the process of estimating a maintenance operation, the content of the estimation rule, and the know-how items relating to an estimation result is maintained.

Next, another maintenance managing system including the maintenance managing apparatus 1 will be described with reference to FIG. 9. FIG. 9 is a block diagram illustrating a second example of the maintenance managing system 100 including a maintenance managing apparatus 1 according to an embodiment.

A maintenance managing apparatus Id of the maintenance managing system 200 illustrated in FIG. 9 describes a case in which only the maintenance operation estimator 1b2 and the estimation rule storage 1b3 of the maintenance managing apparatus 1b of the maintenance managing system 100 described with reference to FIG. 8 are realized. In other words, the functions of the setting history storage 1b4 and the operation history storage 1b5 are included in the maintenance managing apparatus lc. Accordingly, an estimation result of a maintenance operation is stored by the maintenance managing apparatus 1c, and, for example, the degree of freedom in information included in a report generated by the maintenance report generator 1c7 can be further improved. The other functions illustrated in FIG. 9 are similar to those illustrated in FIG. 8, and thus, description of these parts will not be presented. FIG. 9 illustrates another embodiment of a case in which the functions of the maintenance managing apparatus 1 described with reference to FIG. 1 are arranged to be distributed in a plant system. In other words, the maintenance managing system 200 is one embodiment of the maintenance managing apparatus 1.

In the example illustrated in FIG. 9, the maintenance managing system 200 includes a maintenance managing apparatus 1c, a maintenance managing apparatus Id, a field device 2, a maintenance device 3, an operation control apparatus 4, a manufacturing execution system 5, and a core business system 6.

The maintenance managing apparatus 1c has each of functions of a device information acquirer 1c1, a device information provider 1c2, a device list storage 1c3, a parameter designation storage 1c4, a setting history storage 1c5, an operation history storage 1c6, and a maintenance report generator 1c7. The maintenance managing apparatus 1d has each of functions of a maintenance operation estimator 1d1 and an estimation rule storage 1d2. The operation control apparatus 4 has each of functions of a device communicator 41, a device state detector 42, and a device information accessor 43.

Each of the maintenance managing apparatus 1c and the maintenance managing apparatus Id is an apparatus that realizes a part of the functions of the maintenance managing apparatus 1 illustrated in FIG. 1. The maintenance managing apparatus 1c, for example, may be installed at a plant site such as inside the same building as the plant or in a factory. On the other hand, the maintenance managing apparatus 1d, for example, is realized by a virtual computer apparatus provided using a cloud service.

The functions of the maintenance operation estimator 1d1 and the estimation rule storage 1d2 of the maintenance managing apparatus Id are similar to the functions of the maintenance operation estimator 12 and the estimation rule storage 15 of the maintenance managing apparatus 1, and thus, description thereof will not be presented. The maintenance managing apparatus Id does not have the function of the device information acquirer 1b1 illustrated in the maintenance managing apparatus 1b. The reason for this is that a case is illustrated in which device information provided from the device information provider 1c2 is provided for the maintenance operation estimator 1d1.

As described above, the maintenance managing apparatus according to this embodiment includes: the device information acquirer acquiring device information including a change in the state of the field device; and a maintenance operation estimator estimating the performed maintenance operation based on the acquired device information with reference to the estimation rule associating the change described above with a maintenance operation performed to the field device, whereby a decrease in the costs for generating a report accompanying the maintenance operation and the improvement in the quality of the report can be achieved.

The maintenance managing apparatus 1 described above may be an apparatus having the functions described above and, for example, may be realized as a system configured by combining a plurality of apparatuses in which the apparatuses are connected to be able to communicate with each other. The maintenance managing apparatus 1 may be realized by a part of the functions of the maintenance device 3, the operation control apparatus 4, the manufacturing execution system 5, and the like described with reference with FIG. 8.

A maintenance managing method according to this embodiment, by including a device information acquiring step of acquiring device information including a change in the state of the field device and a maintenance operation estimating step of estimating a performed maintenance operation based on the acquired device information with reference to an estimation rule associating the change described above with the maintenance operation performed to the field device, can achieve a decrease in the costs for generating a report accompanying a maintenance operation and improvement in the quality of the report.

By recording a program used for realizing the functions configuring the apparatus described in this embodiment in a computer-readable recording medium and causing the program recorded in the recording medium to be read and executed by a computer system, various processes according to this embodiment described above may be performed. The "computer system" described here may include an OS and hardware such as a peripheral apparatus. In a case in which a WWW system is used, the "computer system" is assumed to also include a homepage providing environment (or display environment). The "computer-readable recording medium" represents a storage device such as a writable non-volatile memory including a flexible disk, a magneto-optical disk, a ROM, and a flash memory, a portable medium such as a CD-ROM, or a hard disk or the like built into a computer system.

Furthermore, the "computer-readable recording medium" includes a medium storing a program for a fixed time such as a volatile memory (for example, a dynamic random access memory (DRAM)) disposed inside a computer system that becomes a server or a client in a case in which a program is transmitted through a network such as the internet or a communication line such as a telephone line. The program described above may be transmitted from a computer system storing this program in a storage device or the like to another computer system through a transmission medium or a transmission wave in a transmission medium. Here, the "transmission medium" transmitting a program represents a medium having an information transmitting function such as a network including the Internet and the like or a communication line including a telephone line. The program described above may be used for realizing a part of the functions described above. In addition, the program described above may be a program realizing the functions described above by being combined with a program recorded in the computer system in advance, a so-called a differential file (differential program).

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A maintenance managing apparatus (1) comprising:
a device information acquirer (11) configured to acquire device information including a change in a state of a field device (2);
an estimation rule storage (15) which stores an estimation rule associating each of multiple changes in the state of the field device (2) with a respective maintenance operation performed to the field device (2);
a maintenance operation estimator (12) configured to:
determine whether or not the change in the state of the field device (2), which is included in the device information acquired by the device information acquirer (11), matches with one of the changes in the state of the field device (2), included in the estimation rule; and
in a case in which the maintenance operation estimator (12) has determined that the change in the state of the field device (2) matches with the one of the changes in the state of the field device (2), acquire information of the maintenance operation associated with the change in the state of the field device (2) from the estimation rule stored in the estimation rule storage (15) to estimate the maintenance operation performed to the field device (2); and
a parameter designation storage (14) configured to store identification information of the field device (2) and a designation of a parameter of the field device (2) in association with each other,
wherein the device information acquirer (11) is configured to acquire a change in the parameter based on the designation of the parameter stored in the parameter designation storage (14), and
wherein the maintenance operation estimator (12) is configured to estimate the maintenance operation based on the change in the parameter of the field device (2) acquired by the device information acquirer (11).

2. The maintenance managing apparatus (1) according to claim 1,
wherein in the estimation rule, at least one of a change in a communication state of the field device (2) and the change of the parameter is associated with the maintenance operation.

3. The maintenance managing apparatus (1) according to claim 1 or 2, further comprising:
a maintenance operation storage (16, 17) which stores the maintenance operation estimated by the maintenance operation estimator (12); and
a maintenance report generator (18) configured to generate a maintenance report based on the maintenance operation stored in the maintenance operation storage (16, 17) .

4. The maintenance managing apparatus (1) according to any one of claims 1 to 3, further comprising:
a device list storage (13) which stores a device list in which the identification information of the field device (2) and a current communication state of the field device (2) or a past communication state of the field device (2) are associated with each other,
wherein the maintenance operation estimator (12) is configured to refer to the estimation rule in accordance with the change in the state of the field device based on the current communication state and the past communication state.

5. The maintenance managing apparatus (1) according to claim 3,
wherein the maintenance operation storage (16, 17) comprises:
a setting history storage (16) which stores a setting history that is a history of maintenance operations of parameter setting estimated by the maintenance operation estimator (12); and
an operation history storage (17) which stores an operation history that is a history of maintenance operations estimated by the maintenance operation estimator (12) other than the parameter setting, and
wherein the maintenance report generator (18) is configured to generate the maintenance report based on the setting history stored in the setting history storage (16) or the operation history stored in the operation history storage (17) .

6. A maintenance managing method comprising:
acquiring, by a device information acquirer (11), device information including a change in a state of a field device (2) ;
storing, into an estimation rule storage (15), an estimation rule associating each of multiple changes in the state of the field device (2) with a respective maintenance operation performed to the field device (2);
determining, by a maintenance operation estimator (12), whether or not the change in the state of the field device (2), which is included in the device information acquired by the device information acquirer (11), matches with one of the changes in the state of the field device (2), included in the estimation rule;
in a case in which the maintenance operation estimator (12) has determined that the change in the state of the field device (2) matches with the one of the changes in the state of the field device (2), acquiring, by the maintenance operation estimator (12), information of the maintenance operation associated with the change in the state of the field device (2) from the estimation rule stored in the estimation rule storage (15);
estimating, by the maintenance operation estimator (12), a maintenance operation performed to the field device (2);
storing, in a parameter designation storage (14), identification information of the field device (2) and a designation of a parameter of the field device (2) in association with each other;
acquiring, by the device information acquirer (11), change in the parameter based on the designation of the parameter stored in the parameter designation storage (14); and
estimating, by the maintenance operation estimator (12), the maintenance operation based on the change in the parameter of the field device (2) acquired by the device information acquirer (11).

7. The maintenance managing method according to claim 6,
wherein in the estimation rule, at least one of a change in a communication state of the field device (2) and the change of the parameter is associated with the maintenance operation.

8. The maintenance managing method according to claim 6 or 7, further comprising:
storing, in a maintenance operation storage (16, 17), the maintenance operation estimated by the maintenance operation estimator (12); and
generating, by a maintenance report generator (18), a maintenance report based on the maintenance operation stored in the maintenance operation storage (16, 17).

9. The maintenance managing method according to any one of claims 6 to 8, further comprising:
storing, in a device list storage (13), a device list in which the identification information of the field device (2) and a current communication state of the field device (2) or a past communication state of the field device (2) are associated with each other; and
referring to, by the maintenance operation estimator (12), the estimation rule in accordance with the change in the state of the field device based on the current communication state and the past communication state.

10. A maintenance managing program configured for execution by a computer, the maintenance managing program comprising instructions for, when executed by the computer , performing the method of claim 6.

11. A non-transitory computer readable storage medium storing one or more programs configured for execution by a computer, the one or more programs comprising instructions for, when executed by the computer , performing the method of claim 6.

## Patentansprüche

1. Eine Wartungsmanagementvorrichtung (1), aufweisend:
einen Geräteinformationserfasser (11), der konfiguriert ist, um Geräteinformationen zu erfassen, die eine Änderung eines Zustands eines Feldgeräts (2) umfassen;
einen Schätzregelspeicher (15), der eine Schätzregel speichert, die jede einer Vielzahl von Änderungen in dem Zustand des Feldgeräts (2) mit einer an dem Feldgerät (2) durchgeführten jeweiligen Wartungsoperation verknüpft;
einen Wartungsoperationsschätzer (12), der konfiguriert ist, um:
zu bestimmen, ob die Änderung des Zustands des Feldgeräts (2), die in den von dem Geräteinformationserfasser (11) erfassten Geräteinformationen enthalten ist, mit einem der Änderungen des Zustands des Feldgeräts (2), die in der Schätzregel enthalten sind, übereinstimmt oder nicht; und
in einem Fall, in dem der Wartungsoperationsschätzer (12) bestimmt hat, dass die Änderung des Zustands des Feldgeräts (2) mit der einen der Änderungen des Zustands des Feldgeräts (2) übereinstimmt, Informationen der Wartungsoperation, die mit der Änderung des Zustands des Feldgeräts (2) verknüpft ist, aus der Schätzregel, die in dem Schätzregelspeicher (15) gespeichert ist, zu erfassen, um die an dem Feldgerät (2) durchgeführte Wartungsoperation zu schätzen; und
einen Parameterbezeichnungsspeicher (14), der konfiguriert ist, um Identifikationsinformationen des Feldgeräts (2) und eine Bezeichnung eines Parameters des Feldgeräts (2) in Verknüpfung miteinander zu speichern,
wobei der Geräteinformationserfasser (11) konfiguriert ist, um eine Änderung des Parameters auf der Grundlage der in dem Parameterbezeichnungsspeicher (14) gespeicherten Bezeichnung des Parameters zu erfassen, und
wobei der Wartungsoperationsschätzer (12) konfiguriert ist, um die Wartungsoperation auf der Grundlage der Änderung des Parameters des Feldgeräts (2), die durch den Geräteinformationserfasser (11) erfasst wird, zu schätzen.

2. Die Wartungsmanagementvorrichtung (1) nach Anspruch 1,
wobei in der Schätzregel mindestens eine von einer Änderung eines Kommunikationszustands des Feldgeräts (2) und der Änderung des Parameters mit der Wartungsoperation verknüpft ist.

3. Die Wartungsmanagementvorrichtung (1) nach Anspruch 1 oder 2, ferner aufweisend:
einen Wartungsoperationsspeicher (16, 17), der die von dem Wartungsoperationsschätzer (12) geschätzte Wartungsoperation speichert; und
einen Wartungsberichtsgenerator (18), der konfiguriert ist, um einen Wartungsbericht auf der Grundlage der in dem Wartungsoperationsspeicher (16, 17) gespeicherten Wartungsoperation zu erzeugen.

4. Die Wartungsmanagementvorrichtung (1) nach einem der Ansprüche 1 bis 3, ferner aufweisend:
einen Gerätelistenspeicher (13), der eine Geräteliste speichert, in der die Identifikationsinformationen des Feldgeräts (2) und ein aktueller Kommunikationszustand des Feldgeräts (2) oder ein vergangener Kommunikationszustand des Feldgeräts (2) miteinander verknüpft sind,
wobei der Wartungsoperationsschätzer (12) konfiguriert ist, um auf die Schätzregel in Übereinstimmung mit der Änderung des Zustands des Feldgeräts auf der Grundlage des aktuellen Kommunikationszustands und des vergangenen Kommunikationszustands Bezug zu nehmen.

5. Die Wartungsmanagementvorrichtung (1) nach Anspruch 3, wobei der Wartungsoperationsspeicher (16, 17) aufweist:
einen Einstellungsverlaufsspeicher (16), der einen Einstellungsverlauf speichert, der ein Verlauf von Wartungsoperationen einer Parametereinstellung ist, die durch den Wartungsoperationsschätzer (12) geschätzt wird; und
einen Operationsverlaufsspeicher (17), der einen Operationsverlauf speichert, der ein Verlauf von Wartungsoperationen ist, die durch den Wartungsoperationsschätzer (12) geschätzt werden, die von der Parametereinstellung verschieden sind, und
wobei der Wartungsberichtsgenerator (18) konfiguriert ist, um den Wartungsbericht auf der Grundlage des in dem Einstellungsverlaufsspeicher (16) gespeicherten Einstellungsverlaufs oder des in dem Operationsverlaufsspeicher (17) gespeicherten Operationsverlaufs zu erzeugen.

6. Ein Wartungsmanagementverfahren, aufweisend:
Erfassen, durch einen Geräteinformationserfasser (11), von Geräteinformationen, die eine Änderung eines Zustands eines Feldgeräts (2) umfassen;
Speichern, in einem Schätzregelspeicher (15), einer Schätzregel, die jede einer Vielzahl von Änderungen in dem Zustand des Feldgeräts (2) mit einer an dem Feldgerät (2) durchgeführten jeweiligen Wartungsoperation verknüpft;
Bestimmen, durch einen Wartungsoperationsschätzer (12), ob die Änderung des Zustands des Feldgeräts (2), die in den Geräteinformationen enthalten ist, die durch den Geräteinformationserfasser (11) erfasst werden, mit einer der Änderungen des Zustands des Feldgeräts (2), die in der Schätzregel enthalten sind, übereinstimmt oder nicht;
in einem Fall, in dem der Wartungsoperationsschätzer (12) bestimmt hat, dass die Änderung des Zustands des Feldgeräts (2) mit der einen der Änderungen des Zustands des Feldgeräts (2) übereinstimmt, Erfassen von Informationen der Wartungsoperation, die mit der Änderung des Zustands des Feldgeräts (2) verknüpft ist, durch den Wartungsoperationsschätzer (12) aus der in dem Schätzregelspeicher (15) gespeicherten Schätzregel;
Schätzen einer an dem Feldgerät (2) durchgeführten Wartungsoperation durch den Wartungsoperationsschätzer (12);
Speichern, in einem Parameterbezeichnungsspeicher (14), von Identifikationsinformationen des Feldgeräts (2) und einer Bezeichnung eines Parameters des Feldgeräts (2) in Verknüpfung miteinander;
Erfassen einer Änderung des Parameters durch den Geräteinformationserfasser (11) auf der Grundlage der Bezeichnung des in dem Parameterbezeichnungsspeicher (14) gespeicherten Parameters; und
Schätzen der Wartungsoperation durch den Wartungsoperationsschätzer (12) auf der Grundlage der Änderung des Parameters des Feldgeräts (2), die durch den Geräteinformationserfasser (11) erfasst wurde.

7. Das Wartungsmanagementverfahren nach Anspruch 6,
wobei in der Schätzregel mindestens eine von einer Änderung in einem Kommunikationszustand des Feldgeräts (2) und der Änderung des Parameters mit der Wartungsoperation verknüpft ist.

8. Das Wartungsmanagementverfahren nach Anspruch 6 oder 7, ferner aufweisend:
Speichern der von dem Wartungsoperationsschätzer (12) geschätzten Wartungsoperation in einem Wartungsoperationsspeicher (16, 17); und
Erzeugen eines Wartungsberichts durch einen Wartungsberichtsgenerator (18) auf der Grundlage der in dem Wartungsoperationsspeicher (16, 17) gespeicherten Wartungsoperation.

9. Das Wartungsmanagementverfahren nach einem der Ansprüche 6 bis 8, ferner aufweisend:
Speichern, in einem Gerätelistenspeicher (13), einer Geräteliste, in der die Identifikationsinformationen des Feldgeräts (2) und ein aktueller Kommunikationszustand des Feldgeräts (2) oder ein vergangener Kommunikationszustand des Feldgeräts (2) miteinander verknüpft sind; und
Beziehen auf die Schätzregel durch den Wartungsoperationsschätzer (12) in Übereinstimmung mit der Änderung des Zustands des Feldgeräts auf der Grundlage des aktuellen Kommunikationszustands und des vergangenen Kommunikationszustands.

10. Ein Wartungsmanagementprogramm, das zur Ausführung durch einen Computer konfiguriert ist, wobei das Wartungsmanagementprogramm Anweisungen aufweist, um, wenn es durch den Computer ausgeführt wird, das Verfahren nach Anspruch 6 durchzuführen.

11. Ein nicht-transitorisches, computerlesbares Speichermedium, das ein oder mehrere Programme speichert, die zur Ausführung durch einen Computer konfiguriert sind, wobei das eine oder die mehreren Programme Anweisungen aufweisen, um, wenn sie durch den Computer ausgeführt werden, das Verfahren nach Anspruch 6 durchzuführen.

## Revendications

1. Appareil de gestion de maintenance (1) comprenant :
un acquéreur d'informations de dispositif (11) configuré pour acquérir des informations de dispositif comprenant un changement d'un état d'un dispositif de terrain (2) ;
un stockage de règle d'estimation (15) qui stocke une règle d'estimation associant chacun de multiples changements de l'état du dispositif de terrain (2) à une opération de maintenance respective réalisée sur le dispositif de terrain (2) ;
un estimateur d'opération de maintenance (12) configuré pour :
déterminer si le changement de l'état du dispositif de terrain (2), qui est compris dans les informations de dispositif acquises par l'acquéreur d'informations de dispositif (11), concorde ou non avec l'un des changements de l'état du dispositif de terrain (2), compris dans la règle d'estimation ; et
dans un cas dans lequel l'estimateur d'opération de maintenance (12) a déterminé que le changement de l'état du dispositif de terrain (2) concorde avec l'un des changements de l'état du dispositif de terrain (2), acquérir des informations de l'opération de maintenance associée au changement de l'état du dispositif de terrain (2) à partir de la règle d'estimation stockée dans le stockage de règle d'estimation (15) pour estimer l'opération de maintenance réalisée sur le dispositif de terrain (2) ; et
un stockage de désignation de paramètre (14) configuré pour stocker des informations d'identification du dispositif de terrain (2) et une désignation d'un paramètre du dispositif de terrain (2) en association l'une avec l'autre,
dans lequel l'acquéreur d'informations de dispositif (11) est configuré pour acquérir un changement du paramètre sur la base de la désignation du paramètre stockée dans le stockage de désignation de paramètre (14), et
dans lequel l'estimateur d'opération de maintenance (12) est configuré pour estimer l'opération de maintenance sur la base du changement du paramètre du dispositif de terrain (2) acquis par l'acquéreur d'informations de dispositif (11).

2. Appareil de gestion de maintenance (1) selon la revendication 1,
dans lequel, dans la règle d'estimation, au moins l'un parmi un changement d'un état de communication du dispositif de terrain (2) et le changement du paramètre est associé à l'opération de maintenance.

3. Appareil de gestion de maintenance (1) selon la revendication 1 ou 2, comprenant en outre :
un stockage d'opération de maintenance (16, 17) qui stocke l'opération de maintenance estimée par l'estimateur d'opération de maintenance (12) ; et
un générateur de rapport de maintenance (18) configuré pour générer un rapport de maintenance sur la base de l'opération de maintenance stockée dans le stockage d'opération de maintenance (16, 17).

4. Appareil de gestion de maintenance (1) selon l'une quelconque des revendications 1 à 3, comprenant en outre :
un stockage de liste de dispositifs (13) qui stocke une liste de dispositifs dans laquelle les informations d'identification du dispositif de terrain (2) et un état de communication courant du dispositif de terrain (2) ou un état de communication antérieur du dispositif de terrain (2) sont associés l'une à l'autre,
dans lequel l'estimateur d'opération de maintenance (12) est configuré pour renvoyer à la règle d'estimation en fonction du changement de l'état du dispositif de terrain sur la base de l'état de communication courant et de l'état de communication antérieur.

5. Appareil de gestion de maintenance (1) selon la revendication 3,
dans lequel le stockage d'opération de maintenance (16, 17) comprend :
un stockage d'historique de réglage (16) qui stocke un historique de réglage qui est un historique d'opérations de maintenance de réglage de paramètre estimées par l'estimateur d'opération de maintenance (12) ; et
un stockage d'historique d'opérations (17) qui stocke un historique d'opérations qui est un historique d'opérations de maintenance estimées par l'estimateur d'opération de maintenance (12) autres que le réglage de paramètre, et
dans lequel le générateur de rapport de maintenance (18) est configuré pour générer le rapport de maintenance sur la base de l'historique de réglage stocké dans le stockage d'historique de réglage (16) ou de l'historique d'opérations stocké dans le stockage d'historique d'opérations (17).

6. Procédé de gestion de maintenance comprenant :
l'acquisition, par un acquéreur d'informations de dispositif (11), d'informations de dispositif comprenant un changement d'un état d'un dispositif de terrain (2) ;
le stockage, dans un stockage de règle d'estimation (15), d'une règle d'estimation associant chacun de multiples changements de l'état du dispositif de terrain (2) à une opération de maintenance respective réalisée sur le dispositif de terrain (2) ;
la détermination, par un estimateur d'opération de maintenance (12), si le changement de l'état du dispositif de terrain (2), qui est compris dans les informations de dispositif acquises par l'acquéreur d'informations de dispositif (11), concorde ou non avec l'un des changements de l'état du dispositif de terrain (2), compris dans la règle d'estimation ;
dans un cas dans lequel l'estimateur d'opération de maintenance (12) a déterminé que le changement de l'état du dispositif de terrain (2) concorde avec l'un des changements de l'état du dispositif de terrain (2), l'acquisition, par l'estimateur d'opération de maintenance (12), d'informations de l'opération de maintenance associée au changement de l'état du dispositif de terrain (2) à partir de la règle d'estimation stockée dans le stockage de règle d'estimation (15) ;
l'estimation, par l'estimateur d'opération de maintenance (12), d'une opération de maintenance réalisée sur le dispositif de terrain (2) ;
le stockage, dans un stockage de désignation de paramètre (14), d'informations d'identification du dispositif de terrain (2) et d'une désignation d'un paramètre du dispositif de terrain (2) en association l'une avec l'autre ;
l'acquisition, par l'acquéreur d'informations de dispositif (11), d'un changement du paramètre sur la base de la désignation du paramètre stockée dans le stockage de désignation de paramètre (14) ; et
l'estimation, par l'estimateur d'opération de maintenance (12), de l'opération de maintenance sur la base du changement du paramètre du dispositif de terrain (2) acquis par l'acquéreur d'informations de dispositif (11).

7. Procédé de gestion de maintenance selon la revendication 6,
dans lequel, dans la règle d'estimation, au moins l'un parmi un changement d'un état de communication du dispositif de terrain (2) et le changement du paramètre est associé à l'opération de maintenance.

8. Procédé de gestion de maintenance selon la revendication 6 ou 7, comprenant en outre :
le stockage, dans un stockage d'opération de maintenance (16, 17), de l'opération de maintenance estimée par l'estimateur d'opération de maintenance (12); et
la génération, par un générateur de rapport de maintenance (18), d'un rapport de maintenance sur la base de l'opération de maintenance stockée dans le stockage d'opération de maintenance (16, 17).

9. Procédé de gestion de maintenance selon l'une quelconque des revendications 6 à 8, comprenant en outre :
le stockage, dans un stockage de liste de dispositifs (13), d'une liste de dispositifs dans laquelle les informations d'identification du dispositif de terrain (2) et un état de communication courant du dispositif de terrain (2) ou un état de communication antérieur du dispositif de terrain (2) sont associés l'une à l'autre ; et
le renvoi, par l'estimateur d'opération de maintenance (12), à la règle d'estimation en fonction du changement de l'état du dispositif de terrain sur la base de l'état de communication courant et de l'état de communication antérieur.

10. Programme de gestion de maintenance configuré pour être exécuté par un ordinateur, le programme de gestion de maintenance comprenant des instructions pour, lorsqu'elles sont exécutées par l'ordinateur, réaliser le procédé selon la revendication 6.

11. Support non transitoire de stockage lisible par ordinateur stockant un ou plusieurs programmes configurés pour être exécutés par un ordinateur, les un ou plusieurs programmes comprenant des instructions pour, lorsqu'elles sont exécutées par l'ordinateur, réaliser le procédé selon la revendication 6.
